# EUROPÄISCHE PATENTANMELDUNG

(11) **EP 2 602 479 A1**
(43) Veröffentlichungstag der Anmeldung: **12.06.2013**
(21) Anmeldenummer: 11009718.5
(22) Anmeldetag: 09.12.2011
(51) Int. Cl.: F03D 1/06, F03D 3/00, F03D 3/04

(54) **Kombiwindkraftanlage**

(71) Anmelder: Forschungsinstitut für naturgerechtes Leben GmbH, 9475 Sevelen (CH)
(72) Erfinder: Themel, Gothard Horst, 9471 Buchs (CH)
(74) Vertreter: Patentbüro Paul Rosenich AG

(57) **Zusammenfassung**

Die Erfindung betrifft eine Windkraftanlage (21) zur Energiegewinnung mit einem Generator, mit einer Basis (28), mit zwei Windkraftelnrichtungen (31), welche jeweils einen um eine Walzenkörperrotationsachse (33) rotierenden Walzenkörper (32) mit einem der Basis (28) zugewandten ersten Ende (34) und mit einem zweiten Ende (35) und eine Windkraftmaschine (41) als Antriebsmittel zur Rotation des Walzenkörpers (32) umfasst, die an dem zweiten Ende (35) des Walzenkörpers (32) vorgesehen ist. Die Windkraftmaschine (41) umfasst einen Stator mit Leitelementen und einen Rotor mit Flügelelementen, wobei der Rotor um eine Rotorrotationsachse rotiert, die in die gleiche Richtung wie die Walzenkörperrotationsachse (33) ausgerichtet ist.

## Beschreibung

Die Erfindung betrifft eine Windkraftanlage nach dem Oberbegriff des Anspruchs 1.

Windkraft zur Energiegewinnung und insbesondere zur Erzeugung von elektrischer Energie gewinnt heutzutage immer mehr an Bedeutung. Dabei werden zwei Hauptanforderungen an zur Energiegewinnung geeigneten Windkraftanlagen gestellt Einerseits sollen diese Windkraftanlagen eine hohe Energieeffizlenz aufweisen beziehungsweise eine grösstmöglichste Energieausbeute gewährleisten und andererseits eine geringe Beeinflussung der Umwelt darstellen, wobel insbesondere die Grösse der Windkraftanlagen kleinstmöglich gehalten werden soll.

Es sind sogenannte Windräder bekannt, die einen an einem Mast angeordneten mehrblättrigen Rotor ausweisen. Zwar ermöglichen solche Windräder eine grosse Energieausbeute aus der Windkraft, aber sie stellen aufgrund ihrer erforderlichen Abmessungen einen massiven und damit unerwünschten Eingriff in die Natur dar.

Aus der EP 0 886 728 B1 ist eine Windkraftanlage zur Energiegewinnung mit einem Generator, mit einem Drehlager als Basis und mit einem um die Drehachse des Drehlagers rotierenden Rotor zur Betätigung des Generators bekannt, der zwei Windkrafteinrichtungen umfasst Jede Windkrafteinrichtung weist einen um eine Walzenkörperrotationsachse rotierenden Walzenkörper mit einem der Basis zugewandten ersten Ende und mit einem dem ersten Ende gegenüberliegenden zwelten Ende auf und umfasst einen Motor bel jeder Windkrafteinrichtung als Antriebsmittel zur Rotation des Walzenkörpers. Eine derartige Windkrafteinrichtung wird auch als Flettner-Rotor bezeichnet, Im Vergleich zu einer Windkraftanlage mit einem Rotorblätter aufweisenden Windrad kann diese Windkraftanlage wesentlich kleiner ausgebildet werden.

Nachteilig an der bekannten Lösung ist, dass zur Rotation der Walzenkörper und somit zur Rotation der Windkrafteinrichtungen um die Drehachse des Drehlagers zusätzlich Energie für den Betrieb des Motors zugeführt werden muss. Damit reduziert sich die aus der Windkraft erzeugbare Energie um einen wesentlichen Anteil, Des Weiteren ist die bekannte Windkraftanlage mechanisch komplex in ihrem Aufbau.

Aus der DE 10 2005 062 615 A1 Ist eine Windkraftanlage zur Energlegewinnung mit mehreren Generatoren, mit einer Scheibe als Basis und mit mehreren Windkrafteinrichtungen zur Betätigung der Generatoren bekannt. Jede Windkrafteinrichtung umfasst einen um eine Walzenkörperrotationsachse rotierenden Walzenkörper mit einem der Basis zugewandten ersten Ende und mit einem dem ersten Ende gegenüberliegenden zweiten Ende, wobei die Walzenkörperrotationsachsen der Walzenkörper jeweils senkrecht zu einer von der Basis aufgespannten Ebene ausgerichtet sind. Weiter umfasst jede Windkrafteinrichtung eine Windkraftmaschine als Antriebsmittel zur Rotation des Walzenkörpers, die an dem zweiten Ende des Walzenkörpers vorgesehen ist. Diese Windkraftmaschine kann als Anlaufhilfe für den entsprechenden Walzenkörper dienen und ist als Savonius-Rotor ausgebildet.

Nachteilig an der bekannten Lösung ist, dass bei sehr geringen oder aber auch bei hohen Windgeschwindigkelten die als Savonius-Rotoren ausgebildete Windkraftmaschine nur beschränkt das Anlaufen und den Antrieb der Walzenkörper gewährleisten. Je nach Ausgestaltung und Ausrichtung der Windkrafteinrichtungen kann die Windkraftmaschine die Rotationsbewegung des Walzenkörpers sogar behindern oder bremsen.

Aufgabe der vorliegenden Erfindung ist es somit, eine Windkraftanlage zu schaffen, welche die vorgenannten Nachteile nicht aufweist und insbesondere bei geringen Abmessungen der Windkraftanlage eine hohe Energieausbeute und flexible Anwendung ermöglicht. Weiter soll die Windkraftanlage über einen grossen Bereich von Windgeschwindigkeiten einsetzbar sein.

Die Aufgabe wird durch die Merkmale der unabhängigen Ansprüche gelöst Vorteilhafte Weiterbildungen sind in den Figuren und in den abhängigen Patentansprüchen dargelegt

Gemäss der Erfindung umfasst die Windkraftmaschine einen Stator mit Leitelementen und einen Rotor mit Flügelelementen, wobei der Rotor um eine Rotorrotationsachse rotiert, die in die gleiche Richtung wie die Walzenkörperrotationsachse ausgerichtet ist.

Diese Windkraftanlage nutzt somit die vorhandene Windenergie mit einer Kombination aus zwei Rotorprinzipen. Die Windkraftmaschine ist oben beziehungsweise am freien Ende des Walzenkörpers angeordnet. Des Weiteren ermöglicht es die Erfindung bei vergleichbarer Leistung die Windkraftanlage bis zu 10-mal kleiner als eine herkömmliche Windkraftanlage, wie beispielsweise eine Windkraftanlage mit einem mehrblättrigen Windrad, auszubllden.

Die Anfangsenergie (Initialenergie) zur Rotation der Walzenkörper wird nur durch die Windkraft und somit kostenlos über die Windkraftmaschine eingeholt Mit der Windkraftmaschine wird die Anfangsenergie auf den Walzenkörper übertragen, welcher dann eine weit höhere Leistung an den Generator abgibt. Aufgrund der Ausgestaltung der Windkraftmaschine läuft die Windkraftanlage bereits bei geringen Windgeschwindigkeiten an. Dabei Ist wesentlich, dass mit der erfindungsgemässen Windkrafteinrichtung bereits Windkräfte genutzt werden, welche den Walzenkörper lediglich symmetrisch umströmen. Beim Anlaufen der Windkraftanlage rotieren die Walzenkörper noch nicht und der sogenannte Magnus-Effekt Ist noch nicht vorhanden. Durch den Magnus-Effekt ergeben sich Querkräfte am Flettner-Rotor, welche zur Rotation zumindest eines Teils der Windkraftanlage genutzt werden. Zudem regelt sich die gesamte Windkraftanlage so ein, dass eine Strömungsausgewogenheit in allen Bereichen eintritt und somit eine hohe Effizienz bei kleinen Gesamtabmessungen der Windkraftanlage erreicht wird.

Die Leitelemente des Stators sind vorteilhaft derart angeordnet, dass die Strömungsgeschwindigkeit In den Bereichen zwischen diesen Leitelementen erhöht wird, womit eine noch bessere Ausnutzung der vorhandenen Windenergie erreicht wird.

Vorzugsweise begrenzen Leitelemente des Stators ein erstes Anströmfach, welches im Wesentlichen in die Hauptarbeitsrichtung der zumindest einen Windkrafteinrichtting ausgerichtet ist, und Leitelemente des Stators begrenzen ein zweites Anströmfach,-welches in eine andere Richtung ausgerichtet Ist, wobei die andere Richtung mit der Hauptarbeitsrichtung einen Winkel von 75° bis 110° und vorteilhaft einen Winkel von 85° bis 95° einschliesst. Zuerst dringt der vorhandene Wind im Wesentlichen durch das zweite Anströmfach In die Windkraftmaschine ein (Frontalströmung), worauf der Rotor der Windkraftmaschine in Rotation und somit auch der Walzenkörper in Rotation versetzt wird. Sobald die Rotation des Walzenkörpers einen bestimmten Wert erreicht hat, beginnt die Windeinrichtung als Gesamtes sich zu bewegen. Dabei strömt zusätzlich Luft ((Dreh-)Rotationsströmung) durch das erste Anströmfach in die Windkraftmaschine ein, welche sich mit dem welterhin durch das zweite Anströmfach anströmenden Wind zumindest bereichsweise vermischt, so dass der Rotor der Windkraftmaschine gleichzeitig von zwei, zueinander versetzt angeordneten Richtungen beströmt wird. Desto schneller die Windelnrichtung sich bewegt, desto mehr Luft strömt durch das erste Anströmfach, wobei die Windkrafteinrichtung und somit die Windkraftanlage immer weiter hoch gefahren wird. Aufgrund dieser Ausgestaltung der Windkrafteinrichtung regelt sich diese so ein, dass eine Strömungsabnahmeausgewogenheit in allen Bereichen eintritt. Des Weiteren kann diese Windkraftanlage auch bei sehr starken Winden, gegebenenfalls bis Orkanstärke betrieben werden, was gegenüber herkömmlichen Windkraftanlagen einen wesentlichen Vorteil in der Ausnutzung der natürlich vorhandenen Energie darstellt.

Bevorzugt verläuft die Rotorrotationsachse des Rotors versetzt zu der Walzenkörperrotationsachse, womit eine Übersetzung zwischen der Rotorrotationsachse und der Walzenkörperrotationsachse angeordnet werden kann. Die Übersetzung liegt vorteilhaft im Bereich von 1:2 bis 1:5, so dass der Walzenkörper zweimal bis fünfmal schneller als der Rotor der Windkraftmaschine dreht. Besonders vorteilhaft liegt die Übersetzung bei 1:3, so dass der Walzenkörper dreimal schneller als der Rotor der Windkraftmaschine dreht. Damit lässt sich das Anlaufverhalten der Windkrafteinrichtung und somit der Windkraftanlage weiter verbessern, da bereits bei sehr geringen Windgeschwindigkeiten ausreichend Energie zur Initialisierung der Rotationsbewegung des Walzenkörpers vorhanden Ist.

Vorzugsweise welsen die Flügelelemente des Rotors im Querschnitt eine tragflächenförmige Ausgestaltung auf, wobei deren sich verjüngende Enden jeweils der Rotationsachse des Rotors zugewandt sind. Derartige Flügetelemente ermöglichen aufgrund ihrer Ausgestaltung eine vorteilhafte Nutzung des durchströmenden Windes. Der Rotor weist vorteilhaft zumindest drei Flügefelemente auf. Die Ausrichtung und Ausgestaltung der Flügelelemente hat einen wesentlichen Einfluss auf den Rotor.

Vorteilhaft ist benachbart zu dem der Rotationsachse des Rotors abgewandten Ende ein das entsprechende Flügelelement durchtrennender Strömungsdurchlass vorgesehen. Dadurch lässt sich ein vorteilhaftes Strömungsverhalten entlang des entsprechenden Flügelelementes erzeugen, welches eine optimale Nutzung der auf den Rotor der Windkraftmaschine einwirkenden Strömung ermöglicht. Vorteilhaft weisen alle Flügelelemente jeweils einen Strömungsdurchlass auf, wobei vorteilhaft diese Strömungsdurchlässe auf einer logarithmischen Strömungsspirale ausgerichtet angeordnet sind.

Bevorzugt weist der Stator zumindest ein Strömungsabschottungselement auf, das bereichsweise umfänglich benachbart zum Rotor vorgesehen ist. Das zumindest eine Strömungsabschottungselement stellt eine Abschirmung dar, welche eine mitgerissene und/oder entgegenkommende Gegenströmung zurückhält und somit die zum Antrieb der Windkrafteinrichtung genutzte Strömung nicht behindert beziehungsweise die Rotation eines Walzenkörpers nicht bremst.

Vorteilhaft ist der Abstand zwischen den Enden des zumindest einen Strömungsabschottungselements zumindest bereichsweise grösser als bei den Enden desselben Strömungsabschottungselements. Im Bereich des grösseren Abstandes ergibt sich im Vergleich zu den Bereichen mit geringerem Abstand unterschiedliche Druckverhältnlsse, welche sich vorteilhaft auf das Rotationsverhalten des Rotors der Windkraftmaschine auswirken.

Vorzugsweise erstreckt sich ein Flügelelement des Rotors über einen auf die Rotationsachse des Rotors bezogenen Flügelwinkelbereich und das zumindest eine Strömungsabschottungselement erstreckt sich über einen Abschottungswinkelbereich, wobei der Abschottungswinkelbereich zumindest dem 0.7-fachen des Flügelwinkelbereich entspricht. Damit wird eine für den Betrieb der Windkraftmaschine ausreichende Abschottung des Rotors vor negativ auf den Rotor einwirkenden Gegenströmungen sichergestellt.

Bevorzugt weist der Walzenkörper an beiden Enden jeweils eine Hutplatte auf, welche die Mantelfläche des Walzenkörpers überragt, und zwischen den Enden des Walzenkörpers ist zumindest ein Hutring vorgesehen, dessen äussere Peripherie die Mantelfläche des Walzenkörpers überragt. Aufgrund der Hutplatten und dem zumindest einen Hutring wird ein ausgewogenes und somit verbessertes Rotationsverhalten des Walzenkörpers erreicht. Damit wird eine etwaig auftretende Druckabdriftung an dem Walzenkörper ausgeglichen beziehungsweise gesteuert, so dass das Drehmoment des Walzenkörpers optimiert wird. Die Platzierung des Hutrings relativ zu einer der Hutplatten beziehungsweise zu einem der Enden des Walzenkörpers ist von sekundärer Bedeutung. Es hat sich gezeigt, dass vorteilhaft ein Abstand zwischen einer Hutplatte beziehungsweise einem Ende des Walzenkörpers und dem Hutring von etwa 2 cm nicht unterschritten werden sollte. Vorteilhaft werden mehrere Hutringe an einem Walzenkörper vorgesehen. Neben einer gleichmässigen Verteilung der mehreren Hutringe entlang der Längserstreckung des Walzenkörpers beziehungsweise zwischen den Enden des Walzenkörpers können diese auch unregelmässig verteilt entlang der Längserstreckung des Walzenkörpers angeordnet sein.

Vorteilhaft überragen die Hutplatten und der zumindest eine Hutring die Mantelfläche des Walzenkörpers mit dem gleichen Mass. Es Ist jedoch beispielsweise je nach Anwendung und/oder je nach örtlicher Gegebenheit gegebenenfalls vorteilhaft, dass der zumindest eine Hutring beziehungsweise zumindest eine der Hutplatten einen verglelchsweise grösseren Überstand aufweist.

Vorzugsweise entspricht der Aussendurchmesser der Hutplatte und/oder des Hutrings dem 1.05-fachen bis 1.2-fachen des Aussendurchmessers des Walzenkörpers an der entsprechenden Position der Hutplatte und/oder des Hutrings, womit eine etwalg auftretende Druckabdriftung an dem Walzenkörper vorteilhaft steuerbar ist.

Bevorzugt nimmt die Grösse des Aussendurchmessers des Walzenkörpers In Richtung seines freien Endes zu, so dass der Walzenkörper die Form eines konischen Rotationszylinders und somit an seinem freien Ende einen grösseren Aussendurchmesser als an seinem der Basis zugewandten Ende aufweist. Dabei kann der Aussendurchmesser von einem Ende zum anderen Ende kontinuierlich oder diskontinuierlich verlaufen, Beispielsweise weist der Walzenkörper bereichsweise Einschnürungen auf. Durch die konische beziehungsweise konenähnliche Form des Walzenkörpers passt sich die Strömungsabnahme entlang des Walzenkörpers der Rotationsbewegung an, womit eine hohe Effizienz der Windkrafteinrichtung und somit der Windkraftanlage gegeben Ist.

Vorzugsweise ist die Basis der Windkraftanlage eine Scheibe, welche um eine Scheibenrotationsachse rotierbar ist, wobei zumindest drei jeweils im gleichen Abstand zu der Scheibenrotationsachse angeordnete Windkraftelnrichtungen vorgesehen sind, deren Walzenkörperrotationsachse jeweils senkrecht zu der von der Scheibe aufgespannten Ebene ausgerichtet ist. Die Scheibe kann eine Volischelbe oder auch eine Ringscheibe sein. Weiter kann die Scheibe durch einzelne, gegebenenfalls linear oder polygonal verlaufende Elemente gebildet sein, welche zu einem scheibenförmigen Körper zusammengesetzt beziehungsweise untereinander verbunden werden. Der Walzenkörper wie auch der Rotor der Windkraftmaschine rotieren jeweils nur um vertikal ausgerichtete Rotationsachsen, so dass die Windkrafteinrichtung aus zwei "Vertikalachsern" gebildet wird. Die Windkraftmaschine ist oben, d. h. am freien Ende des Walzenkörpers vorgesehen.

Bevorzugt sind mehrere Führungselemente für die Scheibe vorgesehen, welche zueinander beabstandet angeordnet sind, womit eine einfache Führung der Scheibe auf einem Untergrund gewährleistet wird und die Scheibe somit materialsparend ausgebildet werden kann. Vorteilhaft sind die Führungselemente im gleichen Abstand zu der Scheibenrotationsachse angeordnet, was eine einfache Konstruktion und Montage der Basis der Windkraftanlage ermöglicht Die Führungselemente sind beispielsweise Gleit- und/oder Rollelemente, welche vorteilhaft entlang einer Führungseinrichtung, wie beispielsweise eine Führungsschiene oder einen Führungsgraben, geführt sind. Alternativ sind die Führungselemente Schwimmkörper, welche auf einer Flüssigkeit z. B. in einem Wasserbett oder offenen Gewässer schwimmen.

Vorzugsweise ist ein Abschottungsmast bei der Scheibenrotationsachse vorgesehen, der ausgehend von der von der Scheibe aufgespannten Ebene eine Längserstreckung aufweist. Dieser Abschottungsmast verhindert eine negative Beeinflussung von den in Windrichtung nachfolgenden Windkrafteinrichtungen infolge des durchströmenden Windes.

Vortellhaft entspricht die Längserstreckung des Abschottungsmastes zumindest der entsprechenden Längserstreckung der Windkrafteinrichtungen, was eine vorteilhafte Abschottung der in Windrichtung nachfolgenden Windkrafteinrichtungen gewährleistet.

Bevorzugt ist bei zumindest einer Windkrafteinrichtung zumindest ein Abschirmelement vorgesehen, das sich entlang eines Umfangbereichs des Aussenumfangs des entsprechenden Walzenkörpers erstreckt sowie beabstandet zu diesem angeordnet ist. Dieses zumindest eine Abschirmelement verhindert den Zutritt einer Gegenströmung während der Rotation der Windkrafteinrichtungen in Hauptarbeltsrlchtung, beispielsweise wenn sich diese Im Windschatten einer anderen Windkrafteinrichtung befindet. Vorteilhaft ist bei jeder Windkrafteinrichtung zumindest ein Abschirmelement vorgesehen. Ein derartiges Abschirmelement kann auch bei einer Windkraftanlage vorgesehen sein, welche zusätzlich einen Abschottmast aufweist.

In einer alternativen Ausführungsform der Windkraftanlage ist die Basis der Windkraftanlage ein um eine Drehachse rotierbares Drehlager, wobei zumindest zwei Windkrafteinrichtungen an dem Drehlager vorgesehen sind. Diese Ausführungsform stellt im Wesentlichen einen Horizontalachser und einen Vertikalachser beziehungsweise ein Windrad dar, wobei dieses die vorgenannten Vorteile der Erfindung aufweist Neben Ausführungsformen mit zwei Windkrafteinrichtungen können auch drei, vier oder mehr Windkrafteinrichtungen vorgesehen werden. Ein wesentlicher Vorteil dieser Lösung stellt die Tatsache dar, dass für einen einwandfreien Betrieb der Windkraftanlage aufgrund derer konstruktiven Ausgestaltung diese nicht zwingend genau in Windrichtung ausrichtet werden muss.

Die Drehachse ist vorteilhaft horizontal ausgerichtet, was ein vorteilhaftes Rotationsverhalten der Windkrafteinrichtungen ohne zusätzliche Energieverluste ermöglicht

In einer weiteren Alternative kann eine Windkraftanlage eine schelbenförmige Basis mit zumindest drei vertikal ausgerichteten Windkrafteinrichtungen sowie zwei um eine im Wesentlichen horizontal ausgerichtete Drehachse rotierenden Windkrafteinrichtungen aufweisen. Die um die im Wesentlichen horizontal ausgerichtete Drehachse rotierenden Windkrafteinrichtungen werden beispielsweise an einem bei der Scheibenrotationsachse vorgesehenen Abschottmast angeordnet.

Die vorgenannten Ausführungen von Windkraftanlagen werden z. B. zur Energieversorgung einer Infrastruktur, insbesondere eines Gebäudes, auf derselben angeordnet.

Weiter kann eine Windkraftanlage mit den vorgenannten Merkmalen als zusammensetzbarer Bausatz ausgebildet sein, welcher für den Transport an einen Verwendungsort in einem Container verstaut und anschliessend bedarfsweise zusammengesetzt werden kann. Der Container kann dabei beispielsweise als Fundament für die Windkraftanlage dienen und zusätzlich die erforderlichen Installationen beinhalten.

Weiter kann eine Windkraftanlage mit den vorgenannten Merkmalen als Antrieb für ein Fahrzeug dienen, wobei die Basis der Windkraftanlage vorteilhaft ein Teil des Fahrzeuges ist. Beispielsweise eignet sich eine solche Windkraftanlage als Antrieb für ein Schiff. Die Windkraftanlage treibt das Antriebsmittel des Fahrzeuges, wie eine Welle oder eine Schiffsschraube, direkt an oder es wird mittels des Generators ein Motor, belspielsweise ein Elektromotor, der seinerseits das Antriebsmittel antreibt, direkt oder über ein Speichermedium, wie eine Batterie, gespeist. Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder In beliebiger Kombination erfindungswesentlich sein.

Die Bezugszeichenliste ist Bestandteil der Offenbarung. Die Figuren werden zusammenhängend und übergreifend beschrieben. Gleiche Bezugszelchen bedeuten gleiche Bauteile.

Es zeigen dabei:
- Fig. 1: Eine erste Ausführungsform einer erfindungsgemässen Windkraftanlage In einer Ansicht von vorne;
- Fig. 2: die Windkraftanlage gemäss Figur 1 in einer Aufsicht;
- Fig. 3: einen Detailschnitt durch das freie Ende einer Windkrafteinrichtung;
- Fig. 4: eine erste Ausführungsform einer Windkraftmaschine im Horizontalschnitt;
- Fig. 5: eine zweite Ausführungsform einer Windkraftmaschine im Horizontalschnitt;
- Fig. 6: eine dritte Ausführungsform einer Windkraftmaschine im Horizontalschnitt;
- Fig. 7: eine vierte Ausführungsform einer Windkraftmaschlne Im Horizontalschnttt;
- Fig. 8: eine fünfte Ausführungsform einer Windkraftmaschine im Horizontalschnitt,
- Fig. 9: eine sechste Ausführungsform einer Windkraftmaschine im Horizoritalschnitt;
- Fig. 10: ein Ausführungsbeispiel eines Rotors im Grundriss;
- Fig. 11: ein Rotorflügelelement des Rotors gemäss Figur 10 in vergrösserter Darstellung;
- Fig. 12: eine zweite Ausführungsform einer erfindungsgemässen Windkraftanlage in einer Aufsicht von oben;
- Fig. 13: einen Teilschnitt durch die Windkraftanlage gemäss Figur 12;
- Fig. 14: ein Detail einer Variante einer erfindungsgemässen Windkraftanlage;
- Fig. 15: ein Horizontalschnitt durch eine erste Ausführungsform eines Walzenkörpers einer Windkraftanlage nach Figur 12 oder 14;
- Fig. 16: ein Horizontalschnitt durch eine zweite Ausführungsform eines Walzenkörpers einer Windkraftanlage nach Figur 12 oder 14; und
- Fig. 17: ein Schiff mit einer erfindungsgemässen Windkraftanlage.

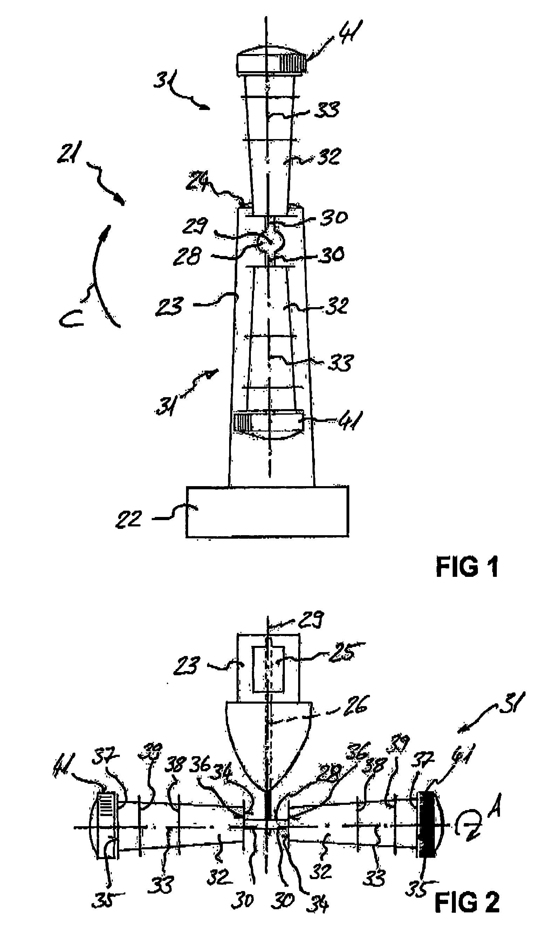

Die in den Figuren 1 und 2 gezeigte Windkraftanlage 21 zur Energiegewinnung aus der Windkraft ist auf einem Fundament 22 oder Gebäude angeordnet, in welchem beispielsweise technische Installationen vorgesehen sind. Ausgehend von dem Fundament 22 erstreckt sich ein Mast 23 an dessen freien Ende 24 ein Generator 25 vorgesehen ist.

Weiter umfasst die Windkraftanlage 21 ein als Basis dienendes Drehlager 28, das um eine horizontal ausgerichtete Drehachse 29 rotiert. Entlang der Drehachse 29 erstreckt sich eine mit dem Generator 25 sowie dem Drehlager 29 verbundene Antriebswelle 26. Das Drehlager 28 weist zwei gegenläufig vom Zentrum des Drehlagers 29 abragende Arme 30 auf, an deren freien Enden jeweils eine Windkrafteinrichtung 31 vorgesehen ist.

Die Windkrafteinrichtung 31 umfasst einen um eine Walzenkörperrotationsachse 33 rotierenden Walzenkörper 32 mit einem dem Drehlager 28 zugewandten ersten Ende 34 und mit einem dem ersten Ende 34 gegenüberllegenden zweiten Ende 35. Die Grösse des Aussendurchmessers des Walzenkörpers 32 nimmt in Richtung seines freien Endes 35 zu. Der Walzenkörper 32 ist ein konischer Rotationszylinder mit flacher Grundfläche und flacher Deckfläche. Die Mantelfläche des Walzenkörpers 32 verläuft vom ersten Ende 34 stetig zum zweiten Ende 35.

Jeder der Walzenkörper 32 weist an beiden Enden 34 bzw. 35 jeweils eine Hutplatte 36 bzw. 37 auf, welche die Mantelfläche des Walzenkörpers 32 überragen. Zwischen den Hutplatten 36 und 37 sind zwei Hutringe 38 und 39 vorgesehen. deren äussere Peripherie jeweils die Manteifläche des Walzenkörpers 32 überragt Der Aussendurchmesser der Hutplatte 36, der Hutplatte 37, des Hutrings 38 und des Hutrings 39 entspricht dem 1.05-fachen bis 1.2-fachen des Aussendurchmessers des Walzenkörpers 32 an der entsprechenden Position der Hutplatte 36 bzw. 37 und des Hutrings 38 bzw. 39.

Weiter umfasst jede Windkrafteinrichtung 31 eine Windkraftmaschine 41 als Antriebsmittel zur Rotation des Walzenkörpers 32, die an dem zweiten Ende 35 des Walzenkörpers 32 vorgesehen Ist.

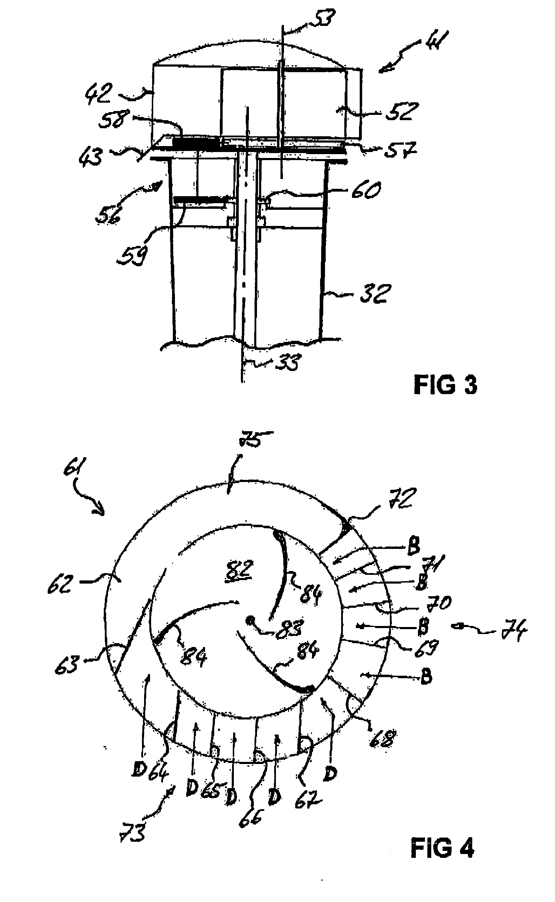

Wie der Figur 3 zu entnehmen Ist umfasst die Windkraftmaschine 41 einen Stator 42 mit mehreren Leitelementen 44, 45, 46 ,47 und 48 und einen Rotor 52 mit drel Flügelelementen 54, wobei der Rotor 52 um eine Rotorrotationsachse 53 rotiert, die in die gleiche Richtung wie die Walzenkörperrotionsachse 33 ausgerichtet ist und versetzt zu dieser verläuft. Die Flügelelemente 54 des Rotors 52 weisen im Querschnitt eine tragflächenförmlge Ausgestaltung auf, wobei deren sich verjüngende Enden jeweils der Rotorrotationsachse 53 des Rotors 52 zugewandt sind.

Zur Übertragung der Rotationsbewegung des Rotors 52 auf den Walzenkörper 32 ist ein Übersatzungsgetriebe 56 mit Übersetzungszahnrädem 57, 58, 59 und 60 vorgesehen. Das Übersetzungsgetriebe 56 ist derart ausgebildet, dass der Rotor 52 und der Walzenkörper 32 die gleiche Rotationsrichtung aufweisen. Die Übersetzung beträgt In diesem Beispiel 1:3, so dass der Walzenkörper 32 schlussendlich dreimal schneller als der Rotor 52 dreht

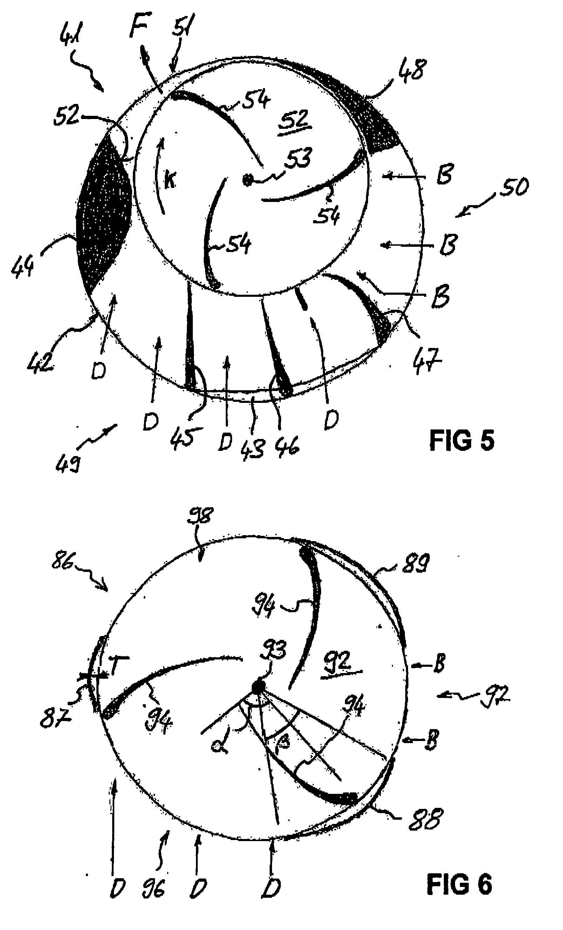

Figur 5 zeigt, dass die Leitelemente 44 und 47 des Stators 42 ein erstes Anströmfach 49 begrenzen, welches Im Wesentlichen in die Hauptarbeitsrichtung (Pfeil C in Fig. 1) der Windkrafteinrichtung 31 ausgerichtet ist. Das erste Anströmfach 49 wird von zwei zusätzlichen, zwischen den Leitelementen 44 und 47 angeordneten Leitelementen 45 und 46 aufgeteilt. Der Boden des Stators 42 weist Im Berelch des ersten Anströmfachs 49 eine den Einiass des ersten Anströmfachs 49 vergrössernde Abkantung 43 auf. Das Leitelement 44 weist eine bauchige dem Rotor zugewandte Seite 52 auf, welche dem Rotor 52 zugewandt ist.

Die Leitelemente 47 und 48 des Stators 42 begrenzen ein zweites Anströmfach 50, welches in eine andere Richtung ausgerichtet ist, wobei die andere Richtung mit der Hauptarbeftsrichtung einen Winkel von etwa 90° einschliesst.

Die Leitelemente 44 und 48 des Stators 42 begrenzen ein Abströmfach 51.

Sämtliche Leitelemente 44, 45, 46, 47 und 48 weisen eine strömungsoptimierte Ausgestaltung auf, womit ein vorteilhafter Verlauf der Strömungen und eine vorteilhafte Lenkung derselben auf die Flügelelemente 54 des Rotors 52 gewährleistet ist. Des Weiteren dienen die Leitelement 44, 45, 46, 47 und 48 der Stabilität der Windkraftmaschine 41. Die Ausrichtung und Winkelstellung der Leitelemente 44, 45, 46, 47 und 48 wird zudem derart gewählt, dass in der Windkraftmaschine keine Kantenabriss- beziehungsweise Windabrissgeräusche auftreten. Durch die Winkelstellung der Leitelemente 44, 45, 46, 47 und 48 zueinander lassen sich In Richtung des Rotors 52 verengte Kanalabschnitte realisieren, welche für eine erhöhte Strömungsgeschwindigkeit der eintretenden Strömung und damit höhere Rotationsgeschwindigkeit des Rotors 52 sorgen.

Sobald ein Wind auf die Windkraftanlage 21 einwirkt, entsteht eine Frontalströmung B, welche durch das zweite Anströmfach 50 in die Windkraftmaschine 41 eindringt und den Rotor 52 in Rotation (Pfeil K) versetzt. Aufgrund dieser Initialrotation wird der Walzenkörper 32 der Windkrafteinrichtung 31 ebenfalls in Rotation versetzt (in Richtung Pfeil A). Sobald ein bestimmter Wert der Rotation des Walzenkörpers 32 erreicht ist, beginnt der Magnus-Effekt zu wirken und die Windkraftelnrichtungen 31 beginnen um die Drehachse 29 herum in Hauptarbeitsrichtung (Pfeil C) zu rotieren. Nun wirkt eine zusätzliche Kreisrotationsströmung D auf die Windkraftmaschine 41, weiche durch das erste Anströmfach 49 in diese eintritt und zusätzlich auf den Rotor 52 einwirkt. Dabei können bereichsweise Mischströmungen auftreten, welche ergänzend auf den Rotor 52 einwirken. Durch das Abströmfach 51 treten die Frontalströmung B und die Kreisrotationsströmung D aus der Windkraftmaschine 41 wieder aus.

Desto schneller die Windkrafteinrichtungen 31 um die Drehachse 29 drehen, desto grösser ist die auf die Windkraftmaschine 41 einwirkende Krelsrotationsströmung D. Somit dreht der Rotor 52 und somit der Walzenkörper 32 bis auf einen durch das System bestimmten Grenzwert immer schneller. Wird der Grenzwert dieses Systems erreicht, regelt sich die Windkrafteinrichtung 31 selbstständig ab. Geringe Windstärken reichen bereits aus, dass die Windkraftanlage 21 zu laufen beginnt. Andererseits kann die Windkraftanlage 21 aufgrund der systembedingten Abriegelung auch bei starken Windstärken betrieben werden. Dadurch weist die erfindungsgemässe Windkraftanlage 21 eine hohe Energieeffizienz beziehungsweise Energieausbeute auf.

Bei der in der Figur 4 dargestellten Windkraftmaschine 61 weist der Rotor 82 ebenfalls drei Flügelelemente 84 auf, Ist jedoch mittig über dem entsprechenden Walzenkörper angeordnet. Die Rotorrotationsachse 83 ist somit mit der Walzenratatonsachse des entsprechenden Walzenkörpers identisch beziehungsweise deckungsgleich.

Die Leitelemente 63 und 68 des Stators 42 begrenzen das erste Anströmfach 73. Das erste Anströmfach 73 wird von vier zusätzlichen, zwischen den Leitelementen 63 und 68 angeordneten Leitelementen 64, 65, 66 und 67 aufgeteilt, welche in diesem Beispiel jeweils gerade und parallel zueinander verlaufen.

Die Leitelemente 68 und 72 des Stators 62 begrenzen das zweite Anströmfach 73, das von drei zusätzlichen, zwischen den Leitelementen 68 und 72 angeordneten Leitelementen 69, 70 und 71 aufgetellt wird. Diese Leitelemente 69, 70 bzw. 71 und die das zweite Anströmfach 73 begrenzenden Seiten der Leitelemente 68 und 72 sind jewells zur Rotorrotationsachse 83 hln ausgerichtet.

Die Leitelemente 63 und 72 des Stators 62 begrenzen das Anströmfach 75.

Bel der in der Figur 6 dargestellten Windkraftmaschine 86 wird der Stator von Strömungsabschottungselementen 87, 88 und 89 gebildet, die bereichsweise umfänglich benachbart zum Rotor 92 vorgesehen sind. Die Strömungsobschottungselemente 87 und 88 begrenzen das erste Anströmfach 96, die Strömungsabschottungselemente 88 und 89 begrenzen das zweite Anströmfach 97 und die Strömungsabschottungselemente 87 und 89 begrenzen das Anströmfach 98. Der Abstand T zwischen den Enden eines Strömungsabschottungselements 87, 88 bzw. 89 ist jeweils bereichsweise grösser als bei den Enden desselben Strömungsabschottungsetements 87, 88 bzw, 89.

Die Flügelelemente 94 des Rotors 92 erstrecken sich über einen auf die Rotorratationsachse 93 des Rotors 92 bezogenen Flügelwinkelbereich und das Strömungsabschottungselement 88 erstreckt sich über einen Abschottungswinkelbereich β, wobei der Abschottungswinkelbereich β zumindest dem 0.7-fachen des Flügelwinkelbereich α entspricht. Auch das Strömungsabschottungselement 89 erstreckt sich vorteilhaft über einen Abschottungswinkelbereich der zumindest dem 0.7-fachen des Flügelwinkelbereich α entspricht Im Gegensatz dazu erstreckt sich In diesem Beispiel das Strömungsabschottungselement 87 über einen wesentlich kleineren Abschottungswinkelbereich, da dieses Strömungsabschottungselement 87 Im Wesentlichen nur eine Trennung zwischen dem ersten Anströmfach 96 und dem Abströmfach 98 darstellt und dieses in Bezug auf eine Abschottung von sekundärer Bedeutung ist

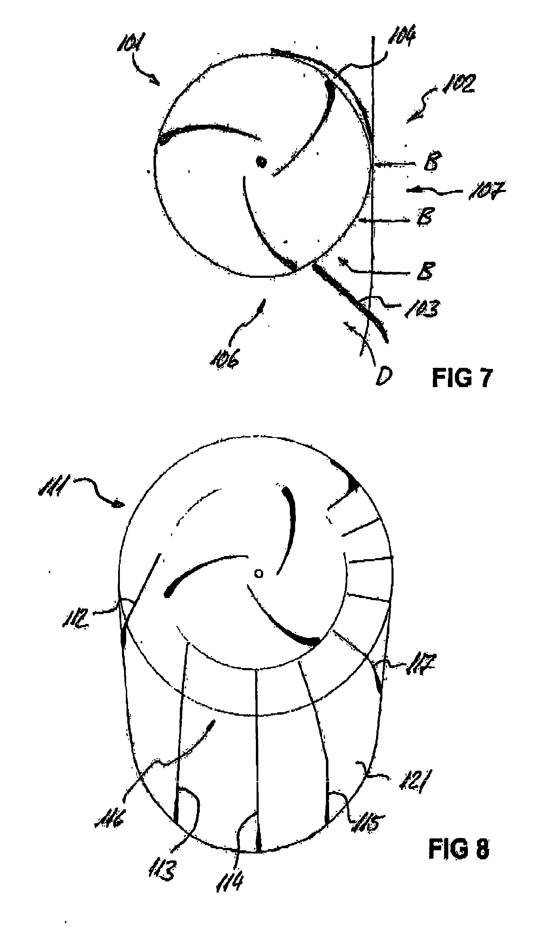

Bel der in der Figur 7 gezeigten Ausführungsform weist der Stator 102 der Windkraftmaschine 101 ein das erste Anströmfach 106 und das zweite Anströmfach 107 abtrennendes Leitelement 103 sowie ein dazu beabstandetes Strömungsabschottungselement 104 auf.

Die Windkraftmaschine 111 gemäss Figur 6 weist einen dem ersten Anströmfach 116 vorgelagerten eiförmigen Einleitapparat 121 auf. Die Leitelemente 112, 113, 114, 115 und 117 erstrecken sich in den elförmigen Einleitapparat 121. Dieser kann gegenüber einer von der Windkraftmaschine 111 aufgespannten Ebene geneigt sein, um eine Kanalisierung der eintretenden Strömung und somit Erhöhung der Strömungsgeschwindlgkelt Im ersten Anströmfach 116 zu schaffen.

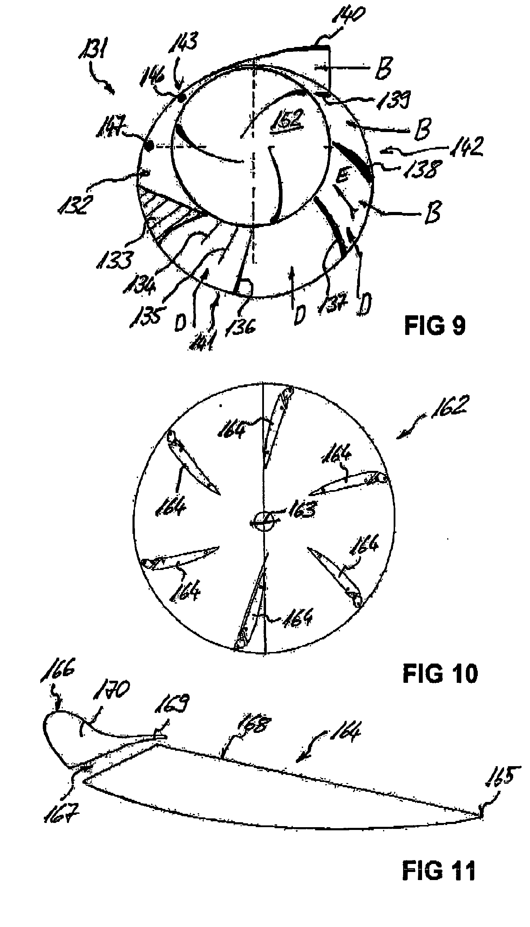

Bei dem in der Figur 9 gezeigten Beispiel der Windkraftmaschine 131 begrenzen die Leitelemente 133 und 138 des Stators 132 das erste Anströmfach 141 und die Leitelemente 137 und 140 begrenzen das zweite Anströmfach 142. Zwischen den Leitelementen 137 und 138 tritt gezielt eine sogenannte Mischströmung E aus der Krelsrotationsströmung D und der Frontalströmung B auf. Die Leitelemente 134 und 135 erstrecken sich ausgehend vom Rotor 152 nicht bis zum äusseren Rand des Stators 132. Im Bereich des Abströmfachs 143. welches von den Leitelementen 133 und 140 begrenzt wird, sind Stützrohre 146 und 147 zur Verbesserung der mechanischen Stabilität der Windkraftmaschine 131 vorgesehen. Das Leitelement 140 ragt über die kreisrunde Peripherie des Stators 132 heraus, wobei dessen freier Endabschnitt im Wesentlichen tangential zu dieser Peripherie verläuft.

Die Figuren 10 und 11 zeigen eine alternative Ausgestaltung eines Rotors 162 mit sechs Flügelelementen 164. Die Flügelelemente 164 des Rotors 162 weisen im Querschnitt eine tragflächenförmige Ausgestaltung auf. Deren sich verjüngende Enden 165 sind jeweils der Rotorrotationsachse 163 des Rotors 162 zugewandt. Benachbart zu dem der Rotorrotationsachse 163 des Rotors 162 abgewandten Ende 166 ist ein das Flügelelement 164 durchtrennender Strömungsdurchlass 167 vorgesehen, der sich zur Unterseite 168 des Flügelelements 164 verjüngt. Weiter ist ein Überdeckungsabschnitt 169 an dem vorderen Abschnitt 170 des Flügelelements 164 vorgesehen. Dieser vordere Abschnitt 170 bildet ein Vorflügel-ähnliches Element aus, womit ein besonders vorteilhaftes Strömungsverhalten in den Bereichen der Flügelelemente 164 realisiert wird. Die Verjüngung des Flügelelements 164 in Richtung des sich verjüngenden Endes 165 erstreckt sich ausgehend von diesem zumindest über 80% der gesamten Länge des Flügelelements 164.

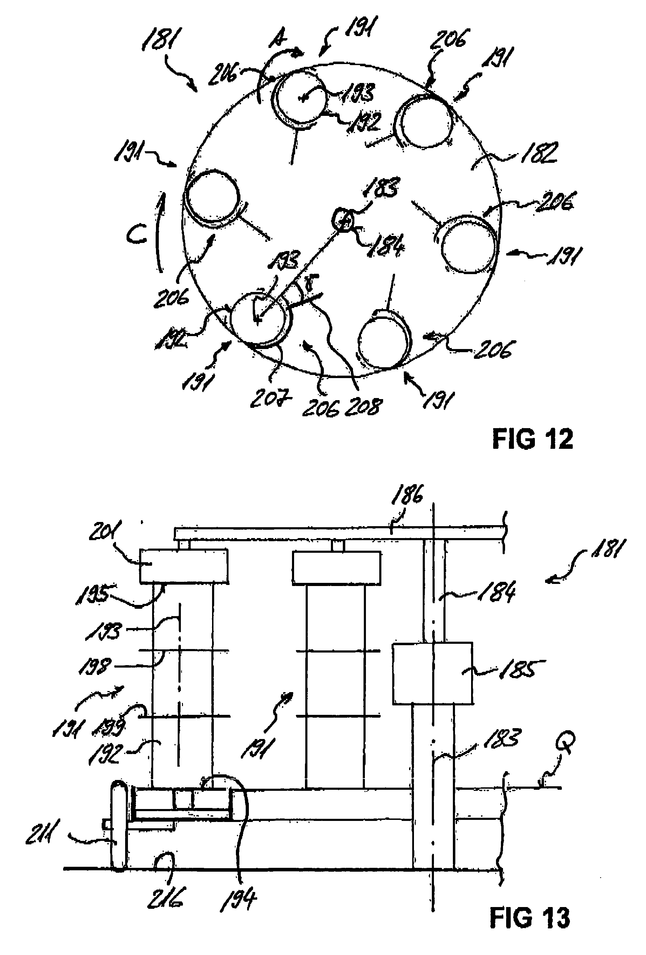

Die in den Figuren 12 und 13 gezeigte Windkraftanlage 181 weist als Basis eine Scheibe 182 auf, welche um eine Scheibenrotationsachse 183 rotierbar ist. Sechs jeweils im gleichen Abstand zu der Schelbenrotationsachse 183 angeordnete Windkrafteirtrichtungen 191 sind vorgesehen, deren Walzenkörperrotationsachse 193 jeweils senkrecht zu der von der Scheibe 182 aufgespannten Ebene Q ausgerichtet ist. Bei der Scheibenrotationsachse 183 ist ein Abschottungsmast 184 vorgesehen, der ausgehend von der von der Scheibe 182 aufgespannten Ebene Q eine Längserstreckung aufweist, welche etwa der entsprechenden Längserstreckung der Windkraftelnrichtungen 191 entspricht. In dem Abschottungsmast 184 ist ein zentraler Generator 185 vorgesehen, welcher durch die Rotation der Scheibe 182 und über eine geeignete Vorrichtung, wie beisplelsweise eine im Abschottmast 184 angeordnete Welle, betätigt wird. Auf den Windkrafteinrichtungen 191 und dem Abschottungsmast 184 ist eine plattenförmige Abdeckung 186 vorgesehen.

Jede Windeinrichtung 191 umfasst einen um die Walzenkörperrotationsachse 193 rotierenden, kreiszylindrischen Walzenkörper 192 mit einem der Scheibe 182 zugewandten ersten Ende 194 und mit einem dem ersten Ende 194 gegenüberliegenden zweiten Ende 195.

Zwischen den Enden 194 und 195 des Walzenkörpers 192 sind an jedem Walzenkörper 192 zwei Hutringe 198 und 199 vorgesehen, deren äussere Peripherie jewells die Mantelfläche des Walzenkörpers 192 überragt.

Weiter umfasst Jede Windkrafteinrichtung 191 eine Windkraftmaschine 201 als Antriebsmittel zur Rotation des Walzenkörpers 192, die an dem zweiten Ende 195 des Walzenkörpers 192 vorgesehen ist. Die Windkraftmaschine 201 weist vorteilhaft eine der vorgenannten Ausgestaltungen beziehungsweise eine Kombination aus Elementen der vorgenannten Ausgestaltungen auf.

Bei jeder der Windkraftelnrichtungen 191 ist jeweils ein Abschirmelement 206 vorgesehen, das sich ausgehend von der Scheibe 182 zumindest bis auf die Höhe des Endes 195 des Walzenkörpers 192 erstreckt. Das Abschirmelement 206 weist einen Abschirmabschnitt 207 auf, der sich entlang eines Umfangbereichs von etwa 180° des Aussenumfangs des Walzenkörpers 192 erstreckt sowie beabstandet zu diesem angeordnet Ist. Weiter ist ein Ablenkabschnitt 208 vorgesehen, der sich auf der dem Walzenkörper 192 abgewandten Seite des Abschirmabschnitts 207 und von diesem ausgehend, auf einer Linie erstreckt, welche mit einer durch die Walzenrotationsachse 193 und die Scheibenrotationsachse 183 verlaufenden Linle einen Winkel γ einschliesst, der in diesem Beispiel etwa 15° beträgt. Durchströmt der Wind diese Windkraftanlage 181 wird auf die Abschirmabschnitte 207 ein zusätzlicher Druck erzeugt, welcher die Rotation der Scheibe 182 um die Scheibenrotationsachse 183 zusätzlich unterstützt und somit die Effizienz der Windkraftanlage 181 welter verbessert.

Die Ausführungen zur Funktionsweise der Windkraftanlage 21 gelten für die Windkraftanlage 181 sinngemäss, wobei die Hauptarbeitsrichtung C der Windkraftanlage 181 um die vertikal verlaufende Scheibenrotationsachse 183 verläuft.

Es sind mehrere Räder 211 als Führungselemente für die Scheibe 182 vorgesehen, welche eine einfache Rotation der Scheibe 182 in Bezug auf den Untergrund 216 gewährleisten. Die Räder 211 sind zueinander beabstandet und im gleichen Abstand zu der Scheibenrotationsachse 183 angeordnet.

Bei der ausschnittswelse dargestellten Windkraftanlage 221 sind die Führungselemente Schwimmkörper 231, welche in einem Wasserbad oder auf einem offenen Gewässer schwimmen.

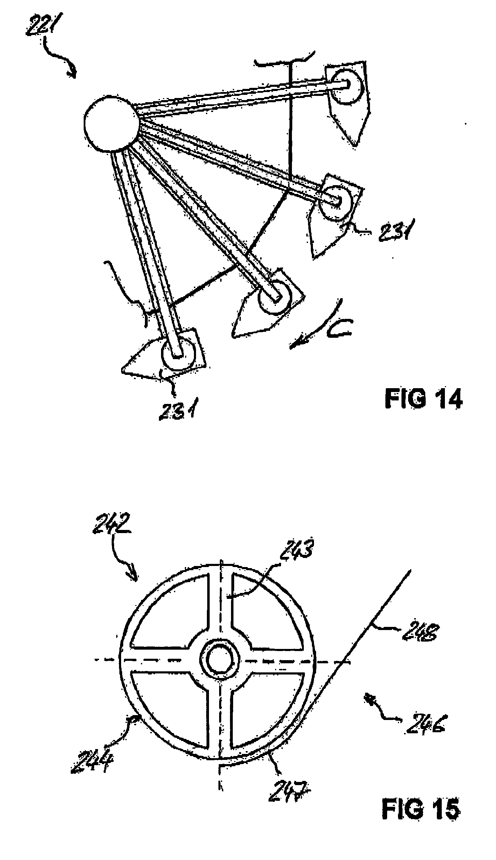

Bei der In der Figur 15 gezeigten Ausführungsform ist der Walzenkörper 242 von mehreren zueinander beabstandeten Skelettringen 243 gebildet, welche über eine äussere Walzenkörperwand 244, z. B. aus Blech, miteinander verbunden sind. Dieser Walzenkörper 242 zeichnet sich durch sein Im Vergleich mit einem Walzenkörper als Vollelement wesentlich geringeres Gewicht aus.

Weiter ist in der Figur 15 ein Abschirmelement 246 gezeigt, welches einen ersten, sich bereichsweise umfänglich und beabstandet zum Walzenkörper 242 erstreckenden Abschirmabschnitt 247 sowie einen tangential abragenden, gerade verlaufenden Ablenkabschnitt 248 aufweist.

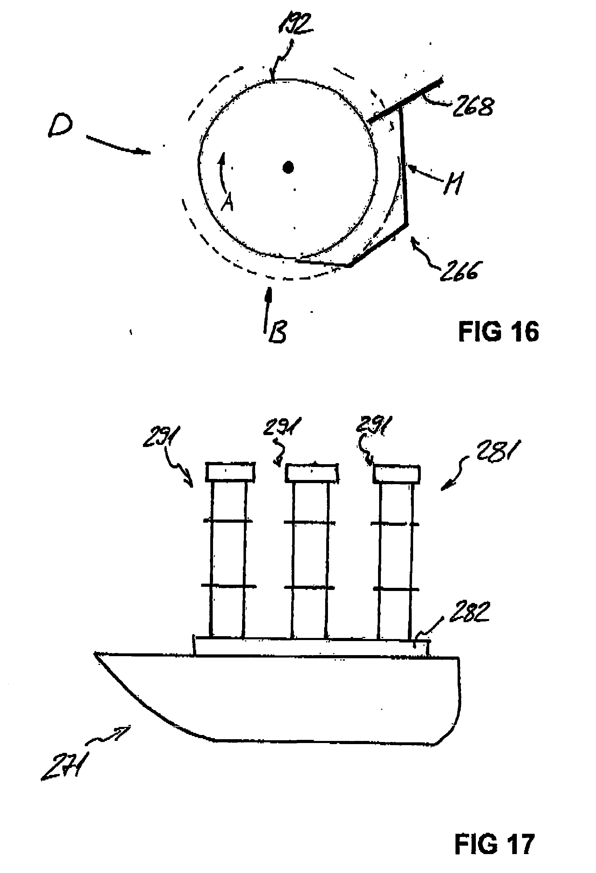

Das Abschirmelement 266 für den Walzenkörper 192 gemäss Figur 16 weist im Grundriss eine polygonale Ausgestaltung auf. Eine Gegenströmung M, welche gegebenenfalls den Walzenkörper 192 abbremsen könnte, wird von dem Abschirmelement 266 abgelenkt, wobel mittels des abragenden Ablenkabschnitts 268 die abgelenkte Gegenströmung M für den Vorschub der Windkrafteinrichtung genutzt wird.

Figur 17 zeigt ein Fahrzeug 271 in Form eines Schiffs, wobei eine Windkraftanlage 281 als Antrieb für das Fahrzeug 271 genutzt wird. Die Basis 282 der Windkraftanlage 281 ist beispielsweise ein Teil des Fahrzeuges 271. Die Windkraftanlage 281 umfasst drei, hintereinander angeordnete Windkrafteinrichtungen 291, welche beispielsweise im Wesentlichen analog zu den Windkraftelnrichtungen 191 der Windkraftanlage 181 ausgebildet sind.

Einzeine Elemente der vorgenannten Ausführungsformen können auch miteinander kombiniert beziehungsweise ausgetauscht werden. Dies betrifft insbesondere die verschiedenen Varianten in Bezug auf die Windkraftmaschine, den Walzenkörper und/oder die dargelegten Hilfselemente.

### Bezugszelchenliste

- 21: Windkraftanlage
- 22: Fundament
- 23: Mast
- 24: freies Ende v. 23
- 25: Generator
- 26: Antriebswelle

- 28: Drehlager
- 29: Drehachse
- 30: Arm
- 31: Windkrafteinrichtung
- 32: Walzenkörper
- 33: Walzenkörperrotationsachse
- 34: Ende v. 32
- 35: freies Ende v. 32
- 36: Hutplatte
- 37: Hutplatte
- 38: Hutring
- 39: Hutring

- 41: Windkraftmaschine
- 42: Stator
- 43: Abkantung
- 44: Leitelement
- 45: Leitelement
- 46: Leitelement
- 47: Leitelement
- 48: Leitelement
- 49: 1. Anströmfach
- 50: 2. Anströmfach
- 51: Anströmfach
- 52: Rotor
- 53: Rotorrotationsachse
- 54: Flügelelement

- 56: Übersetzungsgetriebe
- 57: Übersetzungszahnrad
- 58: Übersetrungszahnrad
- 59: Übersetzungszahnrad
- 60: Übersetzungszahnrad
- 61: Windkraftmaschine
- 62: Stator
- 63: Leitelement
- 64: Leitelement
- 65: Leitelement
- 66: Leitelement
- 67: Leitelement
- 68: Leitelement
- 69: Leitelement
- 70: Leitelement
- 71: Leitelement
- 72: Leitelement
- 73:
- 74: 1. Anströmfach
- 74: 2. Anströmfach
- 75: Abströmfach
- 82: Rotor
- 83: Rotorrotationsachse
- 84: Flügelelement
- 88: Windkraftmaschine
- 87: Strömungsabschoflungselement
- 88: Strömungsabschottungselement
- 89: Strömungsabschottungselement

- 92: Rotor
- 93: Rotorrotationsachse
- 94: Flügelelement

- 96: 1. Anströmfach
- 97: 2. Anströmfach
- 98: Abströmfach

- 101: Windkraftmaschine
- 102: Stator
- 103: Leitelement
- 104: Strömungsabschottungselement

- 106: 1. Anströmfach
- 107: 2. Anströmfach

- 111: Windkraftmaschine
- 112: Leitelement
- 113: Leitelement
- 114: Leitelement
- 115: Leitelement
- 116: 1. Anströmfach
- 117: Leitelement

- 121: Einleitapparat

- 131: Windkraftmaschine
- 132: Stator

- 133: Leitelement

- 134: Leitelemente

- 135: Leitelement
- 136: Leitelement
- 137: Leitelement
- 138: Leitelement
- 139: Leitelement
- 140: Leitelement
- 141: 1. Anströmfach
- 142: 2. Anströmfach
- 143: Abströmfach

- 146: Stützrohr
- 147: Stützrohr

- 152: Rotor

- 162: Rotor
- 163: Rotorrotationsachse
- 164: Flügelelement
- 165: verjüngendes Ende
- 166: Ende
- 167: Strömungsdurchlass
- 168: Unterselte
- 169: Überdeckungsabschnitt
- 170: vorderer Abschnitt

- 181: Windkraftanlage
- 182: Scheibe
- 183: Scheibenrotationsachse
- 184: Abschottungsmast
- 185: Generator
- 186: Abdeckung

- 191: Windkrafteinrichtung
- 192: Walzenkörper
- 193: Watzenkörperrotationsachse
- 194: Ende v. 32
- 195: freles Ende v. 32

- 198: Hutring
- 199: Hutring

- 201: Windkraftmaschine

- 206: Abschirmelement
- 207: Abschirmabschnitt
- 208: Ablenkabschnitt

- 221: Windkraftanlage

- 231: Schwimmkörper

- 242: Walzenkörper
- 243: Skelettring
- 244: Walzankörperwand

- 246: Abschirmelement
- 247: Abschirmabschnitt
- 248: Ablenkabschnitt

- 266: Abschirmelement
- 267: Abschirmabschnitt
- 268: Ablenkabschnitt

- 271: Fahrzeug

- 281: Windkraftanlage
- 282: Basis v. 281

- 291: Windkrafteinrichtung

- A: Rotation Walzenkörper
- B: Frontalströmung
- C: Hauptarbeitsrichtung
- D: Kreisrotationsströmung
- E: Mischströmung aus B+D

- K: Rotationsrichtung v. 52

- M: Gegenströmung

- Q: Ebene v. 182

- T: Abstand v. 87

- α: Flügelwinkeibereich
- β: Abschattungswinkelbereich
- γ: Winkel v. 208

## Patentansprüche

1. Windkraftanlage zur Energiegewinnung mit zumindest einem Generator (25; 185), mit einer Basis (28; 182; 282), mit zumindest einer Windkrafteinrichtung (31: 191; 291) zur Betätigung des zumindest einen Generators (25; 185), welche einen um eine Walzenkörperrotationsachse (33; 193) rotierenden Walzenkörper (32; 192; 242) mit einem der Basis (28; 182; 282) zugewandten ersten Ende (34; 194) und mit einem dem ersten Ende (34; 194) gegenüberliegenden zweiten Ende (35; 195) und eine Windkraftmaschine (41; 61; 86; 101; 111; 131; 201) als Antriebsmittel zur Rotation des Walzenkörpers (32; 192; 242) umfasst, die an dem zweiten Ende (35; 195) des Walzenkörpers (32; 192; 242) vorgesehen ist **dadurch gekennzeichnet, dass** die Windkraftmaschine (41; 61; 86; 101; 111; 131; 201) einen Stator (42; 62; 102; 132) mit Leitelementen (44-48; 63-72; 112-115, 117; 133-140) und einen Rotor (52; 82; 92; 152; 162) mit Flügelelementen (54; 84; 94; 164) umfasst, wobei der Rotor (52; 82; 92; 152; 162) um eine Rotorrotationsachse (53; 83; 93; 163) rotiert, die in die gleiche Richtung wie die Walzenkörperrotationsachse (33; 193) ausgerichtet ist

2. Windkraftanlage nach Anspruch 1, **dadurch gekennzeichnet, dass** Leitelemente (44, 47; 63, 68; 112, 117; 133, 138) des Stators (42; 62; 102; 132) ein erstes Anströmfach (49; 73; 96; 106; 116; 141) begrenzen, welches im Wesentlichen in die Hauptarbeitsrichtung (C) der zumindest einen Windkrafteinrichtung ausgerichtet ist, und Leitelemente (47, 48; 88, 72; 103; 137, 140) des Stators (42; 62; 102; 132) ein zweites Anströmfach (50; 74; 97; 107; 142) begrenzen, welches in eine andere Richtung ausgerichtet ist, wobei die andere Richtung mit der Hauptarbeitsrichtung (C) einen Winkel von 75° bis 110° und vorteilhaft einen Winkel von 85° bis 95° einschliesst.

3. Windkraftanlage nach Anspruch 1 oder 2, **dadurch gekennzeichnet dass** die Rotorrotationsachse (53) des Rotors (52) versetzt zu der Walzenkörperrotationsachse (33) verläuft.

4. Windkraftanlage nach einem der Ansprüche 1 bis 3, **dadurch gekennzeichnet, dass** die Flügelelemente (54; 84; 94; 164) des Rotors (52; 82; 92; 152; 162) im Querschnitt eine tragflächenförmige Ausgestaltung aufweisen, wobei deren sich verjüngende Enden (165) jeweils der Rotorrotationsachse (53; 83; 93; 163) des Rotors (52; 82; 92; 152; 162) zugewandt sind und wobei vorteilhaft benachbart zu dem der Rotorrotationsachse (163) des Rotors (162) abgewandten Ende (166) ein das entsprechende Flügelelement (164) durchtrennender Strömungsdurchlass (167) vorgesehen ist.

5. Windkraftanlage nach einem der Ansprüche 1 bis 4, **dadurch gekennzeichnet, dass** der Stator (102) zumindest ein Strömungsabschottungselement (87, 88, 89; 104) aufweist, das bereichsweise umfänglich benachbart zum Rotor (92) vorgesehen ist, wobei der Abstand (T) zwischen den Enden des zumindest einen Strömungsabschottungselements (87, 88, 89; 104) vorteilhaft zumindest bereichsweise grösser als bei den Enden desselben Strömungsabschottungselements (87, 88, 89; 104) ist.

6. Windkraftanlage nach Anspruch 5, **dadurch gekennzeichnet, dass** ein Flügelelement (94) des Rotors (92) sich über einen auf die Rotorrotationsachse (93) des Rotors (92) bezogenen Flügelwinkelbereich (α) und das zumindest eine Strömungsabschottungsetement (88) sich über einen Abschottungswinkelbereich (β) erstreckt, wobei der Abschottungswinkelbereich (β) zumindest dem 0.7-fachen des Flügelwinkelbereich (α) entspricht.

7. Windkraftanlage nach einem der Ansprüche 1 bis 6, **dadurch gekennzeichnet, dass** der Walzenkörper (32) an beiden Enden (34, 35) jeweils eine Hutplatte (36, 37) aufweist, welche die Mantelfläche des Walzenkörpers (32) überragt, und zwischen den Enden (34, 35; 194, 195) des Walzenkörpers (32; 192) zumindest ein Hutring (38, 39; 198, 199) vorgesehen ist, dessen äussere Peripherie die Mantelfläche des Walzenkörpers (32; 192) überragt.

8. Windkraftanlage nach Anspruch 7, **dadurch gekennzeichnet, dass** der Aussendurchmesser der Hutplatte (36, 37) und/oder des Hutrings (38, 39; 198, 199) dem 1.05-fachen bis 1.2-fachen des Aussendurchmessers des Walzenkörpers (32; 192) an der entsprechenden Position der Hutplatte (36, 37) und/oder des Hutrings (38, 39; 198, 199) entspricht.

9. Windkraftanlage nach einem der Ansprüche 1 bis 8, **dadurch gekennzeichnet, dass** die Grösse des Aussendurchmessers des Walzenkörpers (32) in Richtung seines freien Endes (35) zunimmt.

10. Windkraftanlage nach einem der Ansprüche 1 bis 9, **dadurch gekennzeichnet, dass** die Basis der Windkraftanlage (181) eine Scheibe (182) ist, welche um eine Scheibenrotationsachse (183) rotierbar ist, wobei zumindest drei jeweils im gleichen Abstand zu der Scheibenrotationsachse (183) angeordnete Windkrafteinrichtungen (191) vorgesehen sind, deren Walzenkörperrotationsachse (193) jewells senkrecht zu der von der Scheibe (182) aufgespannten Ebene (Q) ausgerichtet ist.

11. Windkraftanlage nach Anspruch 10, **dadurch gekennzeichnet, dass** mehrere Führungselemente (211; 231) für die Scheibe (182) vorgesehen sind, welche zueinander beabstandet und vorteilhaft im gleichen Abstand zu der Scheibenrotationsachse (183) angeordnet sind.

12. Windkraftanlage nach Anspruch 10 oder 11, **dadurch gekennzeichnet, dass** ein Abschottungsmast (184) bei der Scheibenrotationsachse (183) vorgesehen ist, der ausgehend von der von der Scheibe (182) aufgespannten Ebene (Q) eine Längserstreckung aufweist, welche vorteilhaft zumindest der entsprechenden Längserstreckung der Windkrafteinrichtungen (191) entspricht

13. Windkraftanlage nach einem der Ansprüche 10 bis 12, **dadurch gekennzeichnet, dass** bei zumindest einer Windkrafteinrichtung (191) zumindest ein Abschirmelement (206; 246) vorgesehen ist, das sich entlang eines Umfangbereichs des Aussenumfangs des entsprechenden Walzenkörpers (192; 242) erstreckt sowie beabstandet zu diesem angeordnet ist.

14. Windkraftanlage nach einem der Ansprüche 1 bis 9, **dadurch gekennzeichnet, dass** die Basis der Windkraftanlage ein um eine Drehachse (29) rotierbares Drehlager (28) ist, wobei zumindest zwei Windkrafteinrichtungen (31) an dem Drehlager (28) vorgesehen sind und wobei die Drehachse (28) vorteilhaft horizontal ausgerichtet ist.

15. Verwendung einer Windkraftanlage nach einem der Ansprüche 1 bis 14 zur Energieversorgung einer Infrastruktur, insbesondere eines Gebäudes, oder als Antrieb für ein Fahrzeug (271), insbesondere für ein Schiff, wobei die Basis (282) der Windkraftanlage (281) vorteilhaft ein Teil des Fahrzeuges (271) ist.
